# EUROPEAN PATENT APPLICATION

(11) **EP 4 043 095 A1**
(43) Date of publication of application: **17.08.2022**
(21) Application number: 20883452.3
(22) Date of filing: 30.10.2020
(51) Int. Cl.: B01F 1/00, B01F 3/04, B01F 3/08, B01F 15/04, B01F 15/06

(54) **GENERATION METHOD FOR GENERATING ULTRAFINE-BUBBLE-CONTAINING SOLUTION THAT CONTAINS ULTRAFINE BUBBLES, AND ULTRAFINE-BUBBLE-CONTAINING LIQUID PRODUCTION DEVICE**

(30) Priority: 31.10.2019 JP 2019199393
(71) Applicant: CANON KABUSHIKI KAISHA, OHTA-KU Tokyo 146-8501 (JP)
(72) Inventor: KASHINO Toshio, Tokyo 146-8501 (JP); KUBOTA Masahiko, Tokyo 146-8501 (JP); YAMADA Akitoshi, Tokyo 146-8501 (JP); YAMAMOTO Akira, Tokyo 146-8501 (JP); IMANAKA Yoshiyuki, Tokyo 146-8501 (JP); YANAI Yumi, Tokyo 146-8501 (JP); ISHINAGA Hiroyuki, Tokyo 146-8501 (JP); OZAKI Teruo, Tokyo 146-8501 (JP)
(74) Representative: WESER & Kollegen Patentanwälte PartmbB
(86) International application number: PCT/JP2020/040736
(87) International publication number: WO 2021/085579

(57) **Abstract**

Provided is a generating method for generating an ultra-fine bubble-containing liquid in which multiple types of UFBs of different gas components are mixed at a desired concentration ratio, and a manufacturing apparatus for a liquid containing ultra-fine bubbles. Multiple types of UFB-containing liquids are generated for each gas contained by the UFBs, and the UFB-containing liquids are mixed with each other based on a mix proportion of a desired UFB concentration.

## Description

### Technical Field

The present invention relates to a generating method for generating an ultra-fine bubble-containing liquid containing ultra-fine bubbles smaller than 1.0 µm in diameter and a manufacturing apparatus for a liquid containing ultra-fine bubbles.

### Background Art

Recently, there have been developed techniques for applying the features of fine bubbles such as microbubbles in micrometer-size in diameter and nanobubbles in nanometer-size in diameter. Especially, the utility of ultra-fine bubbles (Ultra Fine Bubble; hereinafter also referred to as "UFBs") smaller than 1.0 µm in diameter has been confirmed in various fields.

In PTL 1, a fine air bubble generating apparatus that generates fine bubbles by jetting a pressurized liquid in which a gas is pressurized and dissolved from a depressurizing nozzle is disclosed. Additionally, in PTL 2, an apparatus that generates fine bubbles by repeating separating and converging of a flow of a gas mixed liquid by using a mixing unit.

### Citation List

### Patent Literature

PTL 1: Japanese Patent Laid-Open No. 2014-104441
PTL 2: International Publication No. WO2009/088085

### Summary of Invention

### Technical Problem

Depending on the intended use, in order to effectively use generated UFBs, there may be a case where desired gases are required to be mixed at a proper ratio to be formed into UFBs. However, there has been no sufficient configuration to generate UFBs in which each gas component is at a proper component ratio, and there has been no other choice but to generate a UFB-containing liquid at a mix ratio that is extremely unstable and is not guaranteed.

Given the circumstances, an object of the present invention is to provide a generating method for an ultra-fine bubble-containing liquid in which multiple types of UFBs with different gas components are mixed at a desired concentration ratio and a manufacturing apparatus for an ultra-fine bubble-containing liquid.

### Solution to Problem

To this end, a generating method for an ultra-fine bubble-containing liquid of the present invention includes: a first dissolving step to generate a first solution by dissolving a first gas into a liquid; a second dissolving step to generate a second solution by dissolving a second gas into a liquid; a first generating step to generate a first ultra-fine bubble-containing liquid containing ultra-fine bubbles by generating the ultra-fine bubbles that are generated by heating the first solution with a heating element to make film boiling on an interface between the first solution and the heating element; a second generating step to generate a second ultra-fine bubble-containing liquid containing ultra-fine bubbles by generating the ultra-fine bubbles that are generated by heating the second solution with a heating element to make film boiling on an interface between the second solution and the heating element; and a mixing step to mix the first ultra-fine bubble-containing liquid and the second ultra-fine bubble-containing liquid with each other based on a concentration of the ultra-fine bubbles contained in the first ultra-fine bubble-containing liquid and a concentration of the ultra-fine bubbles contained in the second ultra-fine bubble-containing liquid.

### Advantageous Effects of Invention

According to the present invention, it is possible to provide a generating method for generating an ultra-fine bubble-containing liquid in which multiple types of UFBs with different gas components are mixed at a desired concentration ratio and a manufacturing apparatus for a liquid containing ultra-fine bubbles.

Further features of the present invention will become apparent from the following description of exemplary embodiments with reference to the attached drawings.

### Brief Description of Drawings

[Fig. 1] Fig. 1 is a diagram illustrating an example of a UFB generating apparatus;
[Fig. 2] Fig. 2 is a schematic configuration diagram of a pre-processing unit;
[Fig. 3] Fig. 3 is a schematic configuration diagram of a dissolving unit and a diagram for describing the dissolving states in a liquid;
[Fig. 4] Fig. 4 is a schematic configuration diagram of a T-UFB generating unit;
[Fig. 5] Fig. 5 is a diagrams for describing details of a heating element;
[Fig. 6] Fig. 6 is a diagrams for describing the states of film boiling on the heating element;
[Fig. 7] Fig. 7 is a diagrams illustrating the states of generation of UFBs caused by expansion of a film boiling bubble;
[Fig. 8] Fig. 8 is a diagrams illustrating the states of generation of UFBs caused by shrinkage of the film boiling bubble;
[Fig. 9] Fig. 9 is a diagrams illustrating the states of generation of UFBs caused by reheating of the liquid;
[Fig. 10] Fig. 10 is a diagrams illustrating the states of generation of UFBs caused by shock waves made by disappearance of the bubble generated by the film boiling;
[Fig. 11] Fig. 11 is a diagrams illustrating a configuration example of a post-processing unit;
[Fig. 12] Fig. 12 is a schematic diagram illustrating a UFB-containing liquid generating apparatus;
[Fig. 13] Fig. 13 is a diagram illustrating a flow of dispensing and mixing a UFB-containing liquid in accordance with a desired mix ratio;
[Fig. 14] Fig. 14 is a diagram illustrating a fixed amount-mixing apparatus that is capable of obtaining a UFB-containing liquid at a desired concentration;
[Fig. 15] Fig. 15 is a diagram illustrating the UFB-containing liquid generating apparatus and generating steps to mix UFB-containing liquids with each other;
[Fig. 16] Fig. 16 is a diagram illustrating the UFB-containing liquid generating apparatus and generating steps to mix UFB-containing liquids with each other;
[Fig. 17] Fig. 17 is a diagram illustrating the UFB-containing liquid generating apparatus and generating steps to mix UFB-containing liquids with each other;
[Fig. 18] Fig. 18 is a diagram illustrating the UFB-containing liquid generating apparatus and generating steps to mix UFB-containing liquids with each other;
[Fig. 19] Fig. 19 is a diagram illustrating a UFB-containing liquid generating system of a first comparative example; and
[Fig. 20] Fig. 20 is a diagram illustrating a UFB-containing liquid generating system of a second comparative example.

### Description of Embodiments

### (First Embodiment)

A first embodiment of the present invention is described with reference to the drawings.

### <<Configuration of UFB Generating Apparatus>>

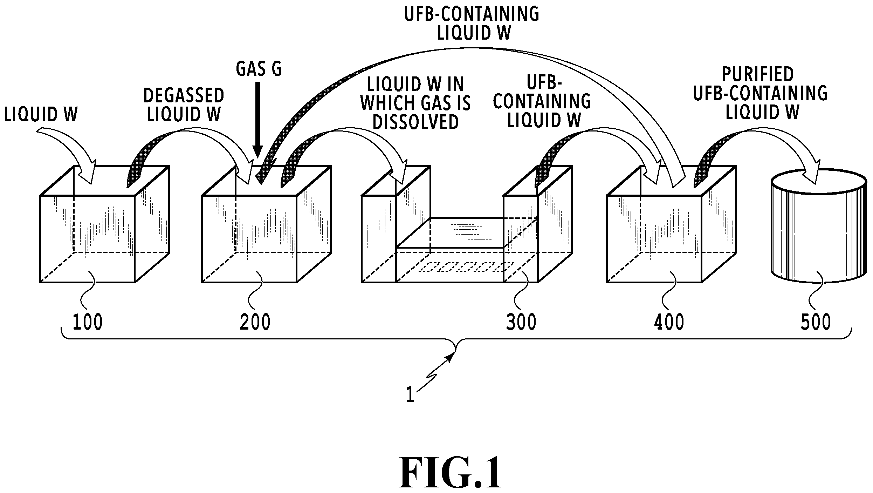

Fig. 1 is a diagram illustrating an example of a UFB generating apparatus applicable to the present invention. A UFB generating apparatus 1 of this embodiment includes a pre-processing unit 100, dissolving unit 200, a T-UFB generating unit 300, a post-processing unit 400, and a collecting unit 500. Each unit performs unique processing on a liquid W such as tap water supplied to the pre-processing unit 100 in the above order, and the thus-processed liquid W is collected as a T-UFB-containing liquid by the collecting unit 500.

Functions and configurations of the units are described below. Although details are described later, UFBs generated by utilizing the film boiling caused by rapid heating are referred to as thermal-ultrafine bubbles (T-UFBs) in this specification.

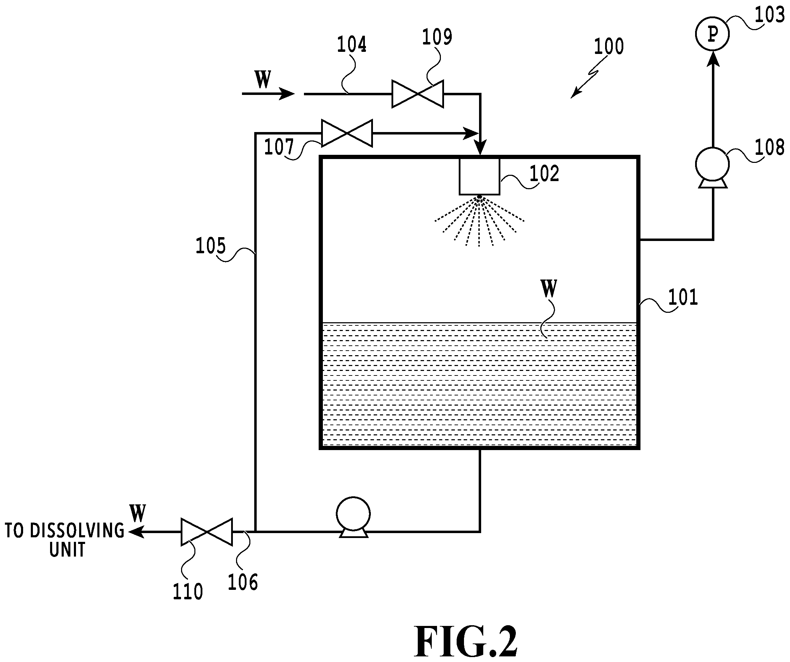

Fig. 2 is a schematic configuration diagram of the pre-processing unit 100. The pre-processing unit 100 of this embodiment performs a degassing treatment on the supplied liquid W. The pre-processing unit 100 mainly includes a degassing container 101, a shower head 102, a depressurizing pump 103, a liquid introduction passage 104, a liquid circulation passage 105, and a liquid discharge passage 106. For example, the liquid W such as tap water is supplied to the degassing container 101 that can retain the liquid from the liquid introduction passage 104 through a valve 109. In this process, the shower head 102 provided in the degassing container 101 sprays a mist of the liquid W in the degassing container 101. The shower head 102 is for prompting the gasification of the liquid W; however, a centrifugal and the like may be used instead as the mechanism for producing the gasification prompt effect.

When a certain amount of the liquid W is retained in the degassing container 101 and then the depressurizing pump 103 is activated with all the valves closed, already-gasified gas components are discharged, and gasification and discharge of gas components dissolved in the liquid W are also prompted. In this process, the internal pressure of the degassing container 101 may be depressurized to around several hundreds to thousands of Pa (1.0 Torr to 10.0 Torr) while checking a manometer 108. The gases to be removed by the degassing unit 100 includes nitrogen, oxygen, argon, carbon dioxide, and so on, for example.

The above-described degassing processing can be repeatedly performed on the same liquid W by utilizing the liquid circulation passage 105. Specifically, the shower head 102 is operated with the valve 109 of the liquid introduction passage 104 and a valve 110 of the liquid discharge passage 106 closed and a valve 107 of the liquid circulation passage 105 opened. This allows the liquid W retained in the degassing container 101 and degassed once to be resprayed in the degassing container 101 from the shower head 102. In addition, with the depressurizing pump 103 operated, the gasification processing by the shower head 102 and the degassing processing by the depressurizing pump 103 are repeatedly performed on the same liquid W. Every time the above processing utilizing the liquid circulation passage 105 is performed repeatedly, it is possible to decrease the gas components contained in the liquid W in stages. Once the liquid W degassed to a desired purity is obtained, the liquid W is transferred to the dissolving unit 200 through the liquid discharge passage 106 with the valve 110 opened.

Fig. 2 illustrates the degassing unit 100 that depressurizes the gas part to gasify the solute; however, the method of degassing the solution is not limited thereto. For example, a heating and boiling method for boiling the liquid W to gasify the solute may be employed, or a film degassing method for increasing the interface between the liquid and the gas using hollow fibers. A SEPAREL series (produced by DIC corporation) is commercially supplied as the degassing module using the hollow fibers. The SEPAREL series uses poly(4-methylpentene-1) (PMP) for the raw material of the hollow fibers and is used for removing air bubbles from ink and the like mainly supplied for a piezo head. In addition, two or more of an evacuating method, the heating and boiling method, and the film degassing method may be used together.

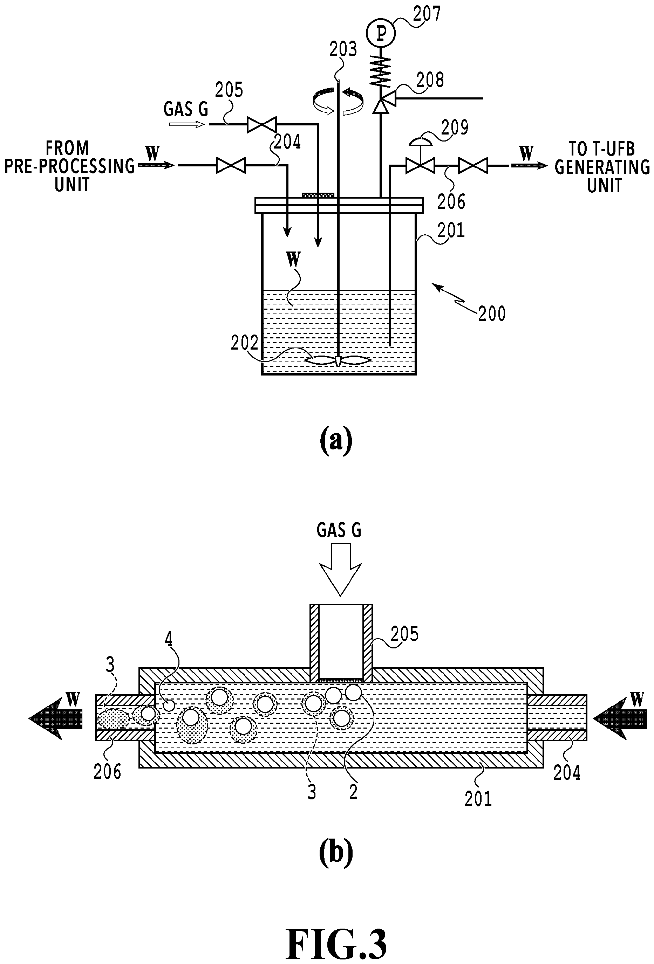

Figs. 3(a) and 3(b) are a schematic configuration diagram of the dissolving unit 200 and a diagram for describing the dissolving states in the liquid. The dissolving unit 200 is a unit for dissolving a desired gas into the liquid W supplied from the pre-processing unit 100. The dissolving unit 200 of this embodiment mainly includes a dissolving container 201, a rotation shaft 203 provided with a rotation plate 202, a liquid introduction passage 204, a gas introduction passage 205, a liquid discharge passage 206, and a pressurizing pump 207.

The liquid W supplied from the pre-processing unit 100 is supplied and retained into the dissolving container 201 through the liquid introduction passage 204. Meanwhile, a gas G is supplied to the dissolving container 201 through the gas introduction passage 205.

Once predetermined amounts of the liquid W and the gas G are retained in the dissolving container 201, the pressurizing pump 207 is activated to increase the internal pressure of the dissolving container 201 to about 0.5 MPa. A safety valve 208 is arranged between the pressurizing pump 207 and the dissolving container 201. With the rotation plate 202 in the liquid rotated via the rotation shaft 203, the gas G supplied to the dissolving container 201 is transformed into air bubbles, and the contact area between the gas G and the liquid W is increased to prompt the dissolution into the liquid W. This operation is continued until the solubility of the gas G reaches almost the maximum saturation solubility. In this case, a unit for decreasing the temperature of the liquid may be provided to dissolve the gas as much as possible. When the gas is with low solubility, it is also possible to increase the internal pressure of the dissolving container 201 to 0.5 MPa or higher. In this case, the material and the like of the container need to be the optimum for safety sake.

Once the liquid W in which the components of the gas G are dissolved at a desired concentration is obtained, the liquid W is discharged through the liquid discharge passage 206 and supplied to the T-UFB generating unit 300. In this process, a back-pressure valve 209 adjusts the flow pressure of the liquid W to prevent excessive increase of the pressure during the supplying.

Fig. 3(b) is a diagram schematically illustrating the dissolving states of the gas G put in the dissolving container 201. An air bubble 2 containing the components of the gas G put in the liquid W is dissolved from a portion in contact with the liquid W. The air bubble 2 thus shrinks gradually, and a gas-dissolved liquid 3 then appears around the air bubble 2. Since the air bubble 2 is affected by the buoyancy, the air bubble 2 may be moved to a position away from the center of the gas-dissolved liquid 3 or be separated out from the gas-dissolved liquid 3 to become a residual air bubble 4. Specifically, in the liquid W to be supplied to the T-UFB generating unit 300 through the liquid discharge passage 206, there is a mix of the air bubbles 2 surrounded by the gas-dissolved liquids 3 and the air bubbles 2 and the gas-dissolved liquids 3 separated from each other.

The gas-dissolved liquid 3 in Fig. 3(b) means "a region of the liquid W in which the dissolution concentration of the gas G mixed therein is relatively high." In the gas components actually dissolved in the liquid W in either case where the gas-dissolved liquid 3 is surrounding the air bubble 2 or separated from the air bubble 2, the concentration of the gas components in the center of the region is the highest, and the concentration is continuously decreased as away from the center. That is, although the region of the gas-dissolved liquid 3 is surrounded by a broken line in Fig. 3(b) for the sake of explanation, such a clear boundary does not actually exist. In addition, in the present invention, a gas that cannot be dissolved completely may be accepted to exist in the form of an air bubble in the liquid.

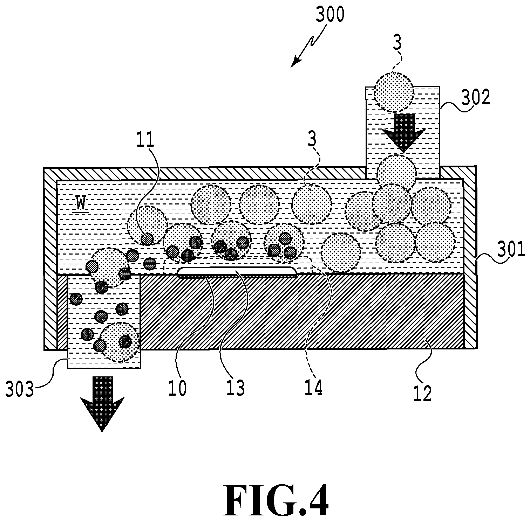

Fig. 4 is a schematic configuration diagram of the T-UFB generating unit 300. The T-UFB generating unit 300 mainly includes a chamber 301, a liquid introduction passage 302, and a liquid discharge passage 303. The flow from the liquid introduction passage 302 to the liquid discharge passage 303 through the chamber 301 is formed by a not-illustrated flow pump. Various pumps including a diaphragm pump, a gear pump, and a screw pump may be employed as the flow pump. The gas-dissolved liquid 3 of the gas G put by the dissolving unit 200 is mixed in the liquid W introduced from the liquid introduction passage 302.

An element substrate 12 provided with a heating element 10 is arranged on a bottom section of the chamber 301. With a predetermined voltage pulse applied to the heating element 10, a bubble 13 generated by the film boiling (hereinafter, also referred to as a film boiling bubble 13) is generated in a region in contact with the heating element 10. Then, an ultrafine bubble (UFB) 11 containing the gas G is generated caused by expansion and shrinkage of the film boiling bubble 13. As a result, a UFB-containing liquid W containing many UFBs 11 is discharged from the liquid discharge passage 303.

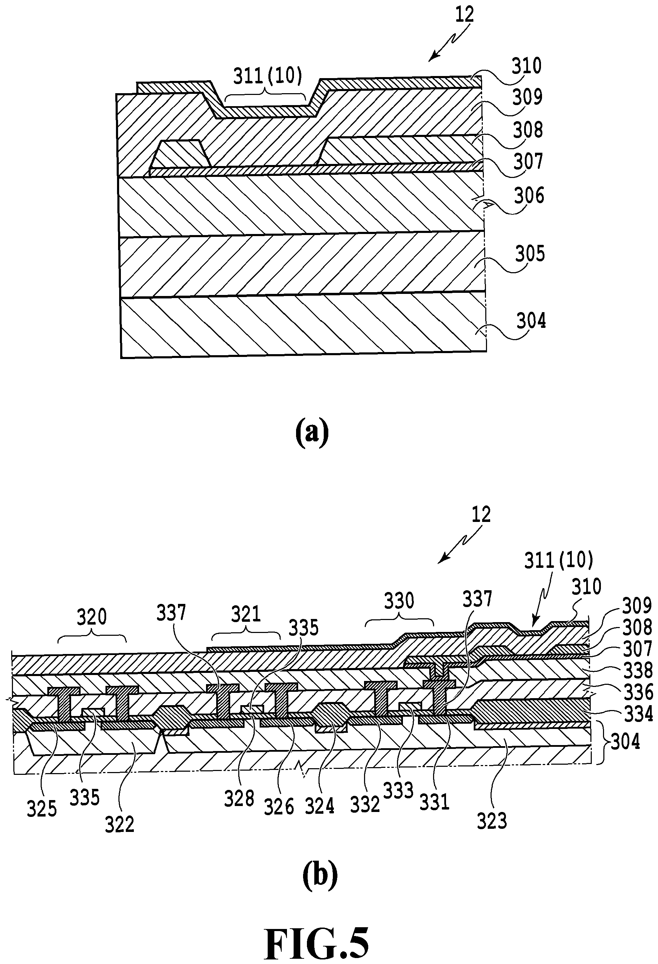

Figs. 5(a) and 5(b) are diagrams for illustrating a detailed configuration of the heating element 10. Fig. 5(a) illustrates a closeup view of the heating element 10, and Fig. 5(b) illustrates a cross-sectional view of a wider region of the element substrate 12 including the heating element 10.

As illustrated in Fig. 5(a), in the element substrate 12 of this embodiment, a thermal oxide film 305 as a heat-accumulating layer and an interlaminar film 306 also served as a heat-accumulating layer are laminated on a surface of a silicon substrate 304. An SiO₂ film or an SiN film may be used as the interlaminar film 306. A resistive layer 307 is formed on a surface of the interlaminar film 306, and a wiring 308 is partially formed on a surface of the resistive layer 307. An Al-alloy wiring of Al, Al-Si, Al-Cu, or the like may be used as the wiring 308. A protective layer 309 made of an SiO₂ film or an Si₃N₄ film is formed on surfaces of the wiring 308, the resistive layer 307, and the interlaminar film 306.

A cavitation-resistant film 310 for protecting the protective layer 309 from chemical and physical impacts due to the heat evolved by the resistive layer 307 is formed on a portion and around the portion on the surface of the protective layer 309, the portion corresponding to a heat-acting portion 311 that eventually becomes the heating element 10. A region on the surface of the resistive layer 307 in which the wiring 308 is not formed is the heat-acting portion 311 in which the resistive layer 307 evolves heat. The heating portion of the resistive layer 307 on which the wiring 308 is not formed functions as the heating element (heater) 10. As described above, the layers in the element substrate 12 are sequentially formed on the surface of the silicon substrate 304 by a semiconductor production technique, and the heat-acting portion 311 is thus provided on the silicon substrate 304.

The configuration illustrated in Fig. 5(a) is an example, and various other configurations are applicable. For example, a configuration in which the laminating order of the resistive layer 307 and the wiring 308 is opposite, and a configuration in which an electrode is connected to a lower surface of the resistive layer 307 (so-called a plug electrode configuration) are applicable. In other words, as described later, any configuration may be applied as long as the configuration allows the heat-acting portion 311 to heat the liquid for generating the film boiling in the liquid.

Fig. 5(b) is an example of a cross-sectional view of a region including a circuit connected to the wiring 308 in the element substrate 12. An N-type well region 322 and a P-type well region 323 are partially provided in a top layer of the silicon substrate 304, which is a P-type conductor. AP-MOS 320 is formed in the N-type well region 322 and an N-MOS 321 is formed in the P-type well region 323 by introduction and diffusion of impurities by the ion implantation and the like in the general MOS process.

The P-MOS 320 includes a source region 325 and a drain region 326 formed by partial introduction of N-type or P-type impurities in a top layer of the N-type well region 322, a gate wiring 335, and so on. The gate wiring 335 is deposited on a part of a top surface of the N-type well region 322 excluding the source region 325 and the drain region 326, with a gate insulation film 328 of several hundreds of Å in thickness interposed between the gate wiring 335 and the top surface of the N-type well region 322.

The N-MOS 321 includes the source region 325 and the drain region 326 formed by partial introduction of N-type or P-type impurities in a top layer of the P-type well region 323, the gate wiring 335, and so on. The gate wiring 335 is deposited on a part of a top surface of the P-type well region 323 excluding the source region 325 and the drain region 326, with the gate insulation film 328 of several hundreds of Å in thickness interposed between the gate wiring 335 and the top surface of the P-type well region 323. The gate wiring 335 is made of polysilicon of 3000 Å to 5000 Å in thickness deposited by the CVD method. A C-MOS logic is constructed with the P-MOS 320 and the N-MOS 321.

In the P-type well region 323, an N-MOS transistor 330 for driving an electrothermal conversion element (heating resistance element) is formed on a portion different from the portion including the N-MOS 321. The N-MOS transistor 330 includes a source region 332 and a drain region 331 partially provided in the top layer of the P-type well region 323 by the steps of introduction and diffusion of impurities, a gate wiring 333, and so on. The gate wiring 333 is deposited on a part of the top surface of the P-type well region 323 excluding the source region 332 and the drain region 331, with the gate insulation film 328 interposed between the gate wiring 333 and the top surface of the P-type well region 323.

In this example, the N-MOS transistor 330 is used as the transistor for driving the electrothermal conversion element. However, the transistor for driving is not limited to the N-MOS transistor 330, and any transistor may be used as long as the transistor has a capability of driving multiple electrothermal conversion elements individually and can implement the above-described fine configuration. Although the electrothermal conversion element and the transistor for driving the electrothermal conversion element are formed on the same substrate in this example, those may be formed on different substrates separately.

An oxide film separation region 324 is formed by field oxidation of 5000 Å to 10000 Å in thickness between the elements, such as between the P-MOS 320 and the N-MOS 321 and between the N-MOS 321 and the N-MOS transistor 330. The oxide film separation region 324 separates the elements. A portion of the oxide film separation region 324 corresponding to the heat-acting portion 311 functions as a heat-accumulating layer 334, which is the first layer on the silicon substrate 304.

An interlayer insulation film 336 including a PSG film, a BPSG film, or the like of about 7000 Å in thickness is formed by the CVD method on each surface of the elements such as the P-MOS 320, the N-MOS 321, and the N-MOS transistor 330. After the interlayer insulation film 336 is made flat by heat treatment, an Al electrode 337 as a first wiring layer is formed in a contact hole penetrating through the interlayer insulation film 336 and the gate insulation film 328. On surfaces of the interlayer insulation film 336 and the Al electrode 337, an interlayer insulation film 338 including an SiO₂ film of 10000 Å to 15000 Å in thickness is formed by a plasma CVD method. On the surface of the interlayer insulation film 338, a resistive layer 307 including a TaSiN film of about 500 Å in thickness is formed by a co-sputter method on portions corresponding to the heat-acting portion 311 and the N-MOS transistor 330. The resistive layer 307 is electrically connected with the Al electrode 337 near the drain region 331 via a through-hole formed in the interlayer insulation film 338. On the surface of the resistive layer 307, the wiring 308 of Al as a second wiring layer for a wiring to each electrothermal conversion element is formed. The protective layer 309 on the surfaces of the wiring 308, the resistive layer 307, and the interlayer insulation film 338 includes an SiN film of 3000 Å in thickness formed by the plasma CVD method. The cavitation-resistant film 310 deposited on the surface of the protective layer 309 includes a thin film of about 2000 Å in thickness, which is at least one metal selected from the group consisting of Ta, Fe, Ni, Cr, Ge, Ru, Zr, Ir, and the like. Various materials other than the above-described TaSiN such as TaN0.8, CrSiN, TaAl, WSiN, and the like can be applied as long as the material can generate the film boiling in the liquid.

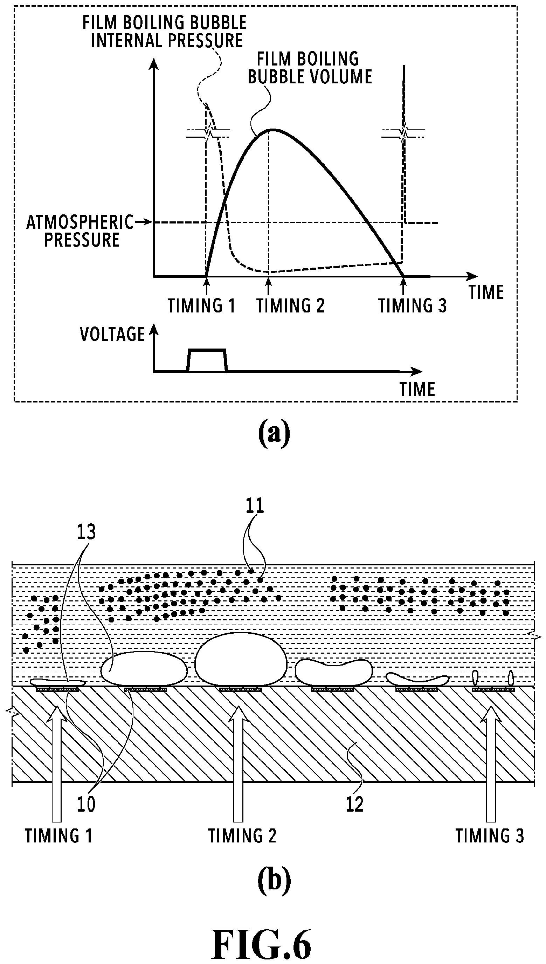

Figs. 6(a) and 6(b) are diagrams illustrating the states of the film boiling when a predetermined voltage pulse is applied to the heating element 10. In this case, the case of generating the film boiling under atmospheric pressure is described. In Fig. 6(a), the horizontal axis represents time. The vertical axis in the lower graph represents a voltage applied to the heating element 10, and the vertical axis in the upper graph represents the volume and the internal pressure of the film boiling bubble 13 generated by the film boiling. On the other hand, Fig. 6(b) illustrates the states of the film boiling bubble 13 in association with timings 1 to 3 shown in Fig. 6(a). Each of the states is described below in chronological order. The UFBs 11 generated by the film boiling as described later are mainly generated near a surface of the film boiling bubble 13. The states illustrated in Fig. 6(b) are the states where the UFBs 11 generated by the generating unit 300 are resupplied to the dissolving unit 200 through the circulation route, and the liquid containing the UFBs 11 is resupplied to the liquid passage of the generating unit 300, as illustrated in Fig. 1.

Before a voltage is applied to the heating element 10, the atmospheric pressure is substantially maintained in the chamber 301. Once a voltage is applied to the heating element 10, the film boiling is generated in the liquid in contact with the heating element 10, and a thus-generated air bubble (hereinafter, referred to as the film boiling bubble 13) is expanded by a high pressure acting from inside (timing 1). A bubbling pressure in this process is expected to be around 8 to 10 MPa, which is a value close to a saturation vapor pressure of water.

The time for applying a voltage (pulse width) is around 0.5 µsec to 10.0 µsec, and the film boiling bubble 13 is expanded by the inertia of the pressure obtained in timing 1 even after the voltage application. However, a negative pressure generated with the expansion is gradually increased inside the film boiling bubble 13, and the negative pressure acts in a direction to shrink the film boiling bubble 13. After a while, the volume of the film boiling bubble 13 becomes the maximum in timing 2 when the inertial force and the negative pressure are balanced, and thereafter the film boiling bubble 13 shrinks rapidly by the negative pressure.

In the disappearance of the film boiling bubble 13, the film boiling bubble 13 disappears not in the entire surface of the heating element 10 but in one or more extremely small regions. For this reason, on the heating element 10, further greater force than that in the bubbling in timing 1 is generated in the extremely small region in which the film boiling bubble 13 disappears (timing 3).

The generation, expansion, shrinkage, and disappearance of the film boiling bubble 13 as described above are repeated every time a voltage pulse is applied to the heating element 10, and new UFBs 11 are generated each time.

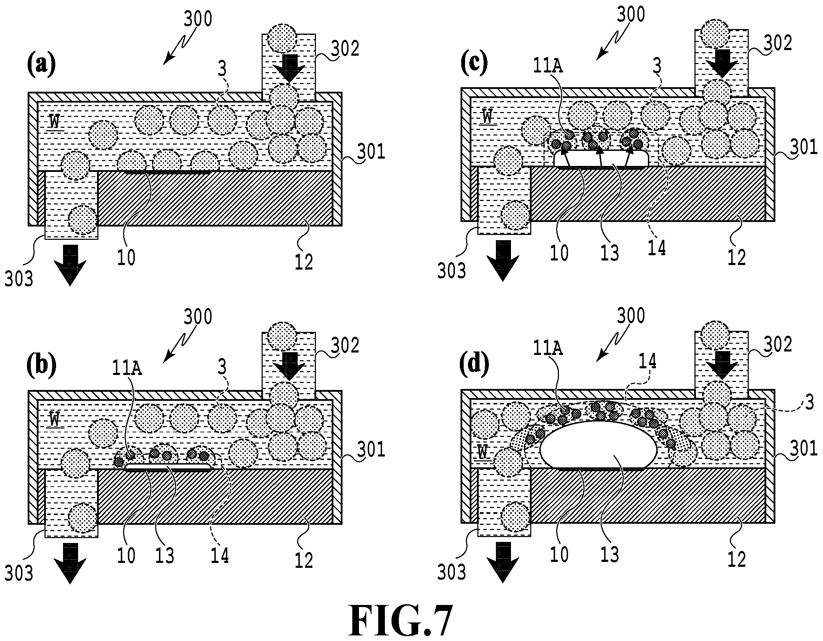

The states of generation of the UFBs 11 in each process of the generation, expansion, shrinkage, and disappearance of the film boiling bubble 13 are further described in detail with reference to Figs. 7 to 10.

Figs. 7(a) to 7(d) are diagrams schematically illustrating the states of generation of the UFBs 11 caused by the generation and the expansion of the film boiling bubble 13. Fig. 7(a) illustrates the state before the application of a voltage pulse to the heating element 10. The liquid W in which the gas-dissolved liquids 3 are mixed flows inside the chamber 301.

Fig. 7(b) illustrates the state where a voltage is applied to the heating element 10, and the film boiling bubble 13 is evenly generated in almost all over the region of the heating element 10 in contact with the liquid W. When a voltage is applied, the surface temperature of the heating element 10 rapidly increases at a speed of 10°C/µsec. The film boiling occurs at a time point when the temperature reaches almost 300°C, and the film boiling bubble 13 is thus generated.

Thereafter, the surface temperature of the heating element 10 keeps increasing to around 600 to 800°C during the pulse application, and the liquid around the film boiling bubble 13 is rapidly heated as well. In Fig. 7, a region of the liquid that is around the film boiling bubble 13 and to be rapidly heated is indicated as a not-yet-bubbling high temperature region 14. The gas-dissolved liquid 3 within the not-yet-bubbling high temperature region 14 exceeds the thermal dissolution limit and is precipitated to become the UFB. The thus-precipitated air bubbles have diameters of around 10 nm to 100 nm and large gas-liquid interface energy. Thus, the air bubbles float independently in the liquid W without disappearing in a short time. In this embodiment, the air bubbles generated by the thermal action from the generation to the expansion of the film boiling bubble 13 are called first UFBs 11A.

Fig. 7(c) illustrates the state where the film boiling bubble 13 is expanded. Even after the voltage pulse application to the heating element 10, the film boiling bubble 13 continues expansion by the inertia of the force obtained from the generation thereof, and the not-yet-bubbling high temperature region 14 is also moved and spread by the inertia. Specifically, in the process of the expansion of the film boiling bubble 13, the gas-dissolved liquid 3 within the not-yet-bubbling high temperature region 14 is precipitated as a new air bubble and becomes the first UFB 11A.

Fig. 7(d) illustrates the state where the film boiling bubble 13 has the maximum volume. As the film boiling bubble 13 is expanded by the inertia, the negative pressure inside the film boiling bubble 13 is gradually increased along with the expansion, and the negative pressure acts to shrink the film boiling bubble 13. At a time point when the negative pressure and the inertial force are balanced, the volume of the film boiling bubble 13 becomes the maximum, and then the shrinkage is started.

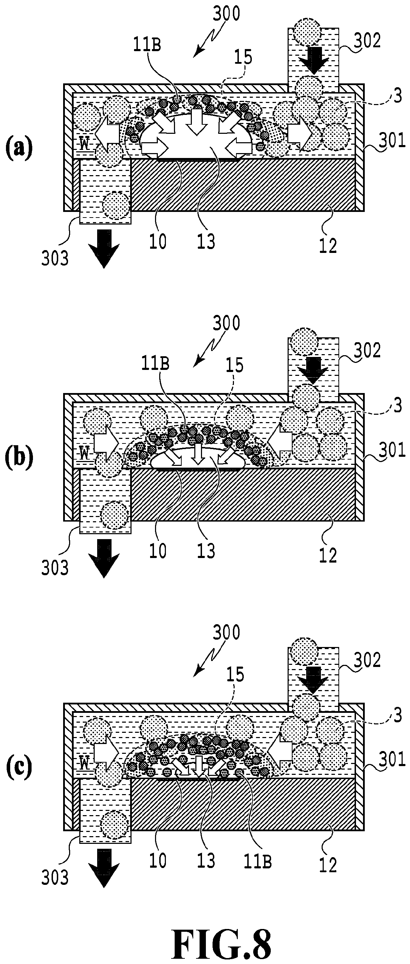

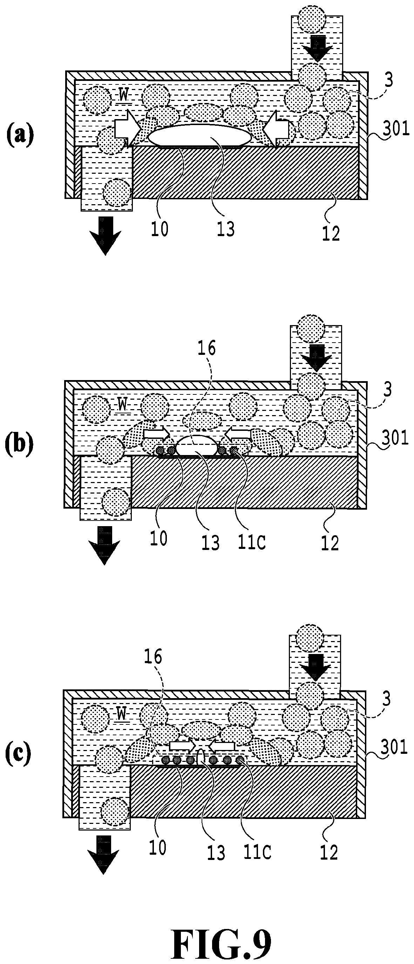

In the shrinking stage of the film boiling bubble 13, there are UFBs generated by the processes illustrated in Figs. 8(a) to 8(c) (second UFBs 11B) and UFBs generated by the processes illustrated in Figs. 9(a) to 9(c) (third UFBs). It is considered that these two processes are made simultaneously.

Figs. 8(a) to 8(c) are diagrams illustrating the states of generation of the UFBs 11 caused by the shrinkage of the film boiling bubble 13. Fig. 8(a) illustrates the state where the film boiling bubble 13 starts shrinking. Although the film boiling bubble 13 starts shrinking, the surrounding liquid W still has the inertial force in the expansion direction. Because of this, the inertial force acting in the direction of going away from the heating element 10 and the force going toward the heating element 10 caused by the shrinkage of the film boiling bubble 13 act in a surrounding region extremely close to the film boiling bubble 13, and the region is depressurized. The region is indicated in Fig. 8(a) as a not-yet-bubbling negative pressure region 15.

The gas-dissolved liquid 3 within the not-yet-bubbling negative pressure region 15 exceeds the pressure dissolution limit and is precipitated to become an air bubble. The thus-precipitated air bubbles have diameters of about 100 nm and thereafter float independently in the liquid W without disappearing in a short time. In this embodiment, the air bubbles precipitated by the pressure action during the shrinkage of the film boiling bubble 13 are called the second UFBs 11B.

Fig. 8(b) illustrates a process of the shrinkage of the film boiling bubble 13. The shrinking speed of the film boiling bubble 13 is accelerated by the negative pressure, and the not-yet-bubbling negative pressure region 15 is also moved along with the shrinkage of the film boiling bubble 13. Specifically, in the process of the shrinkage of the film boiling bubble 13, the gas-dissolved liquids 3 within a part over the not-yet-bubbling negative pressure region 15 are precipitated one after another and become the second UFBs 11B.

Fig. 8(c) illustrates the state immediately before the disappearance of the film boiling bubble 13. Although the moving speed of the surrounding liquid W is also increased by the accelerated shrinkage of the film boiling bubble 13, a pressure loss occurs due to a flow passage resistance in the chamber 301. As a result, the region occupied by the not-yet-bubbling negative pressure region 15 is further increased, and a number of the second UFBs 11B are generated.

Figs. 9(a) to 9(c) are diagrams illustrating the states of generation of the UFBs by reheating of the liquid W during the shrinkage of the film boiling bubble 13. Fig. 9(a) illustrates the state where the surface of the heating element 10 is covered with the shrinking film boiling bubble 13.

Fig. 9(b) illustrates the state where the shrinkage of the film boiling bubble 13 has progressed, and a part of the surface of the heating element 10 comes in contact with the liquid W. In this state, there is heat left on the surface of the heating element 10, but the heat is not high enough to cause the film boiling even if the liquid W comes in contact with the surface. A region of the liquid to be heated by coming in contact with the surface of the heating element 10 is indicated in Fig. 9(b) as a not-yet-bubbling reheated region 16. Although the film boiling is not made, the gas-dissolved liquid 3 within the not-yet-bubbling reheated region 16 exceeds the thermal dissolution limit and is precipitated. In this embodiment, the air bubbles generated by the reheating of the liquid W during the shrinkage of the film boiling bubble 13 are called the third UFBs 11C.

Fig. 9(c) illustrates the state where the shrinkage of the film boiling bubble 13 has further progressed. The smaller the film boiling bubble 13, the greater the region of the heating element 10 in contact with the liquid W, and the third UFBs 11C are generated until the film boiling bubble 13 disappears.

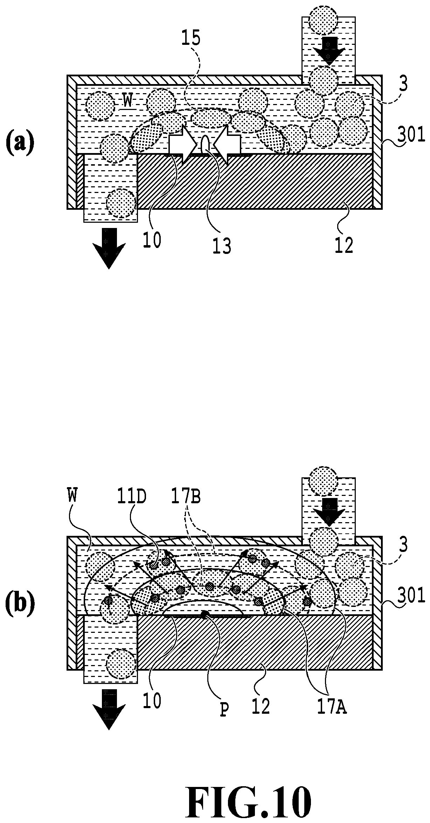

Figs. 10(a) and 10(b) are diagrams illustrating the states of generation of the UFBs caused by an impact from the disappearance of the film boiling bubble 13 generated by the film boiling (that is, a type of cavitation). Fig. 10(a) illustrates the state immediately before the disappearance of the film boiling bubble 13. In this state, the film boiling bubble 13 shrinks rapidly by the internal negative pressure, and the not-yet-bubbling negative pressure region 15 surrounds the film boiling bubble 13.

Fig. 10(b) illustrates the state immediately after the film boiling bubble 13 disappears at a point P. When the film boiling bubble 13 disappears, acoustic waves ripple concentrically from the point P as a starting point due to the impact of the disappearance. The acoustic wave is a collective term of an elastic wave that is propagated through anything regardless of gas, liquid, and solid. In this embodiment, coarse of the liquid W, which are a high pressure surface 17A and a low pressure surface 17B of the liquid W, are propagated alternately.

In this case, the gas-dissolved liquid 3 within the not-yet-bubbling negative pressure region 15 is resonated by the shock waves made by the disappearance of the film boiling bubble 13, and the gas-dissolved liquid 3 exceeds the pressure dissolution limit and the phase transition is made in timing when the low pressure surface 17B passes therethrough. Specifically, a number of air bubbles are precipitated in the not-yet-bubbling negative pressure region 15 simultaneously with the disappearance of the film boiling bubble 13. In this embodiment, the air bubbles generated by the shock waves made by the disappearance of the film boiling bubble 13 are called fourth UFBs 11D.

The fourth UFBs 11B generated by the shock waves made by the disappearance of the film boiling bubble 13 suddenly appear in an extremely short time (1 µS or less) in an extremely narrow thin film-shaped region. The diameter is sufficiently smaller than that of the first to third UFBs, and the gas-liquid interface energy is higher than that of the first to third UFBs. For this reason, it is considered that the fourth UFBs 11D have different characteristics from the first to third UFBs 11A to 11C and generate different effects.

Additionally, the fourth UFBs 11D are evenly generated in many parts of the region of the concentric sphere in which the shock waves are propagated, and the fourth UFBs 11D evenly exist in the chamber 301 from the generation thereof. Although many first to third UFBs already exist in the timing of the generation of the fourth UFBs 11D, the presence of the first to third UFBs does not affect the generation of the fourth UFBs 11D greatly. It is also considered that the first to third UFBs do not disappear due to the generation of the fourth UFBs 11D.

As described above, it is expected that the UFBs 11 are generated in the multiple stages from the generation to the disappearance of the film boiling bubble 13 by the heat generation of the heating element 10. The first UFBs 11A, the second UFBs 11B, and the third UFBs 11C are generated near the surface of the film boiling bubble generated by the film boiling. In this case, near means a region within about 20 µm from the top surface of the film boiling bubble. The fourth UFBs 11D are generated in a region through which the shock waves are propagated when the air bubble disappears. Although the above example illustrates the stages to the disappearance of the film boiling bubble 13, the way of generating the UFBs is not limited thereto. For example, with the generated film boiling bubble 13 communicating with the atmospheric air before the bubble disappearance, the UFBs can be generated also if the film boiling bubble 13 does not reach the exhaustion.

Next, remaining properties of the UFBs are described. The higher the temperature of the liquid, the lower the dissolution properties of the gas components, and the lower the temperature, the higher the dissolution properties of the gas components. In other words, the phase transition of the dissolved gas components is prompted and the generation of the UFBs becomes easier as the temperature of the liquid is higher. The temperature of the liquid and the solubility of the gas are in the inverse relationship, and the gas exceeding the saturation solubility is transformed into air bubbles and precipitated into the liquid as the liquid temperature increases.

Therefore, when the temperature of the liquid rapidly increases from normal temperature, the dissolution properties are decreased without stopping, and the generation of the UFBs starts. The thermal dissolution properties are decreased as the temperature increases, and a number of the UFBs are generated.

Conversely, when the temperature of the liquid decreases from normal temperature, the dissolution properties of the gas are increased, and the generated UFBs are more likely to be liquefied. However, the temperature is sufficiently lower than normal temperature. Additionally, since the once generated UFBs have a high internal pressure and large gas-liquid interface energy even when the temperature of the liquid decreases, it is highly unlikely that there is exerted a sufficiently high pressure to break such a gas-liquid interface. In other words, the once generated UFBs do not disappear easily as long as the liquid is stored at normal temperature and normal pressure.

In this embodiment, the first UFBs 11A described with Figs. 7(a) to 7(c) and the third UFBs 11C described with Figs. 9(a) to 9(c) can be described as UFBs that are generated by utilizing such thermal dissolution properties of gas.

On the other hand, in the relationship between the pressure and the dissolution properties of liquid, the higher the pressure of the liquid, the higher the dissolution properties of the gas, and the lower the pressure, the lower the dissolution properties. In other words, the phase transition to the gas of the gas-dissolved liquid dissolved in the liquid is prompted and the generation of the UFBs becomes easier as the pressure of the liquid is lower. Once the pressure of the liquid becomes lower than normal pressure, the dissolution properties are decreased without stopping, and the generation of the UFBs starts. The pressure dissolution properties are decreased as the pressure decreases, and a number of the UFBs are generated.

Conversely, when the pressure of the liquid increases to be higher than normal temperature, the dissolution properties of the gas are increased, and the generated UFBs are more likely to be liquefied. However, the pressure is sufficiently higher than the atmospheric pressure. Additionally, since the once generated UFBs have a high internal pressure and large gas-liquid interface energy even when the pressure of the liquid increases, it is highly unlikely that there is exerted a sufficiently high pressure to break such a gas-liquid interface. In other words, the once generated UFBs do not disappear easily as long as the liquid is stored at normal temperature and normal pressure.

In this embodiment, the second UFBs 11B described with Figs. 8(a) to 8(c) and the fourth UFBs 11D described with Figs. 10(a) to 10(c) can be described as UFBs that are generated by utilizing such pressure dissolution properties of gas.

Those first to fourth UFBs generated by different causes are described individually above; however, the above-described generation causes occur simultaneously with the event of the film boiling. Thus, at least two types of the first to the fourth UFBs may be generated at the same time, and these generation causes may cooperate to generate the UFBs. It should be noted that it is common for all the generation causes to be induced by the volume change of the film boiling bubble generated by the film boiling phenomenon. In this specification, the method of generating the UFBs by utilizing the film boiling caused by the rapid heating as described above is referred to as a thermal-ultrafine bubble (T-UFB) generating method. Additionally, the UFBs generated by the T-UFB generating method are referred to as T-UFBs, and the liquid containing the T-UFBs generated by the T-UFB generating method is referred to as a T-UFB-containing liquid.

Almost all the air bubbles generated by the T-UFB generating method are 1.0 µm or less, and milli-bubbles and microbubbles are unlikely to be generated. That is, the T-UFB generating method allows dominant and efficient generation of the UFBs. Additionally, the T-UFBs generated by the T-UFB generating method have larger gas-liquid interface energy than that of the UFBs generated by a conventional method, and the T-UFBs do not disappear easily as long as being stored at normal temperature and normal pressure. Moreover, even if new T-UFBs are generated by new film boiling, it is possible to prevent disappearance of the already generated T-UFBs due to the impact from the new generation. That is, it can be said that the number and the concentration of the T-UFBs contained in the T-UFB-containing liquid have the hysteresis properties depending on the number of times the film boiling is made in the T-UFB-containing liquid. In other words, it is possible to adjust the concentration of the T-UFBs contained in the T-UFB-containing liquid by controlling the number of the heating elements provided in the T-UFB generating unit 300 and the number of the voltage pulse application to the heating elements.

Reference to Fig. 1 is made again. Once the T-UFB-containing liquid W with a desired UFB concentration is generated in the T-UFB generating unit 300, the ultra-fine bubble-containing liquid W is supplied to the post-processing unit 400.

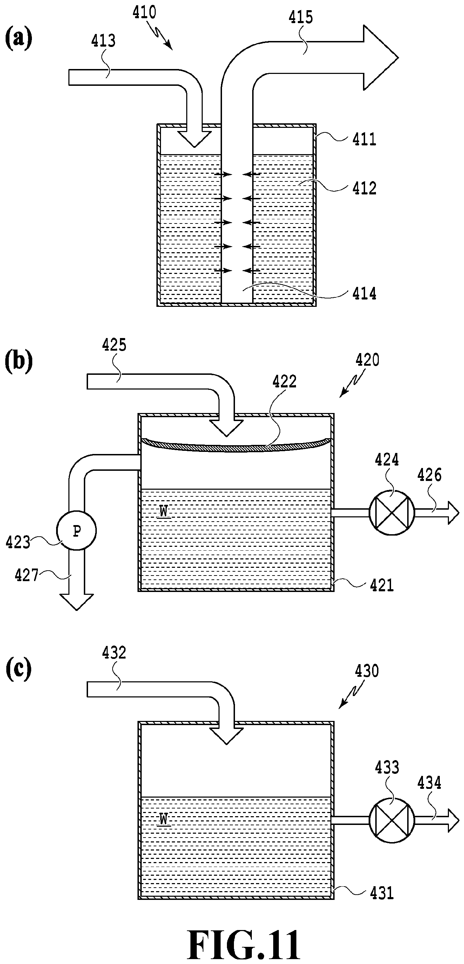

Figs. 11(a) to 11(c) are diagrams illustrating configuration examples of the post-processing unit 400 of this embodiment. The post-processing unit 400 of this embodiment removes impurities in the UFB-containing liquid W in stages in the order from inorganic ions, organic substances, and insoluble solid substances.

Fig. 11(a) illustrates a first post-processing mechanism 410 that removes the inorganic ions. The first post-processing mechanism 410 includes an exchange container 411, cation exchange resins 412, a liquid introduction passage 413, a collecting pipe 414, and a liquid discharge passage 415. The exchange container 411 stores the cation exchange resins 412. The UFB-containing liquid W generated by the T-UFB generating unit 300 is injected to the exchange container 411 through the liquid introduction passage 413 and absorbed into the cation exchange resins 412 such that the cations as the impurities are removed. Such impurities include metal materials peeled off from the element substrate 12 of the T-UFB generating unit 300, such as SiO₂, SiN, SiC, Ta, Al₂O₃, Ta₂O₅, and Ir.

The cation exchange resins 412 are synthetic resins in which a functional group (ion exchange group) is introduced in a high polymer matrix having a three-dimensional network, and the appearance of the synthetic resins are spherical particles of around 0.4 to 0.7 mm. A general high polymer matrix is the styrene-divinylbenzene copolymer, and the functional group may be that of methacrylic acid series and acrylic acid series, for example. However, the above material is an example. As long as the material can remove desired inorganic ions effectively, the above material can be changed to various materials. The UFB-containing liquid W absorbed in the cation exchange resins 412 to remove the inorganic ions is collected by the collecting pipe 414 and transferred to the next step through the liquid discharge passage 415.

Fig. 11(b) illustrates a second post-processing mechanism 420 that removes the organic substances. The second post-processing mechanism 420 includes a storage container 421, a filtration filter 422, a vacuum pump 423, a valve 424, a liquid introduction passage 425, a liquid discharge passage 426, and an air suction passage 427. Inside of the storage container 421 is divided into upper and lower two regions by the filtration filter 422. The liquid introduction passage 425 is connected to the upper region of the upper and lower two regions, and the air suction passage 427 and the liquid discharge passage 426 are connected to the lower region thereof. Once the vacuum pump 423 is driven with the valve 424 closed, the air in the storage container 421 is discharged through the air suction passage 427 to make the pressure inside the storage container 421 negative pressure, and the UFB-containing liquid W is thereafter introduced from the liquid introduction passage 425. Then, the UFB-containing liquid W from which the impurities are removed by the filtration filter 422 is retained into the storage container 421.

The impurities removed by the filtration filter 422 include organic materials that may be mixed at a tube or each unit, such as organic compounds including silicon, siloxane, and epoxy, for example. A filter film usable for the filtration filter 422 includes a filter of a sub-µm-mesh that can remove bacteria, and a filter of a nm-mesh that can remove virus.

After a certain amount of the UFB-containing liquid W is retained in the storage container 421, the vacuum pump 423 is stopped and the valve 424 is opened to transfer the T-UFB-containing liquid in the storage container 421 to the next step through the liquid discharge passage 426. Although the vacuum filtration method is employed as the method of removing the organic impurities herein, a gravity filtration method and a pressurized filtration can also be employed as the filtration method using a filter, for example.

Fig. 11(c) illustrates a third post-processing mechanism 430 that removes the insoluble solid substances. The third post-processing mechanism 430 includes a precipitation container 431, a liquid introduction passage 432, a valve 433, and a liquid discharge passage 434.

First, a predetermined amount of the UFB-containing liquid W is retained into the precipitation container 431 through the liquid introduction passage 432 with the valve 433 closed, and leaving it for a while. Meanwhile, the solid substances in the UFB-containing liquid W are precipitated onto the bottom of the precipitation container 431 by gravity. Among the bubbles in the UFB-containing liquid, relatively large bubbles such as microbubbles are raised to the liquid surface by the buoyancy and also removed from the UFB-containing liquid. After a lapse of sufficient time, the valve 433 is opened, and the UFB-containing liquid W from which the solid substances and large bubbles are removed is transferred to the collecting unit 500 through the liquid discharge passage 434. The example of applying the three post-processing mechanisms in sequence is shown in this embodiment; however, it is not limited thereto, and a needed post-processing mechanism may be employed when necessary.

Reference to Fig. 1 is made again. The T-UFB-containing liquid W from which the impurities are removed by the post-processing unit 400 may be directly transferred to the collecting unit 500 or may be put back to the dissolving unit 200 again. In the latter case, the gas dissolution concentration of the T-UFB-containing liquid W that is decreased due to the generation of the T-UFBs can be compensated to the saturated state again by the dissolving unit 200. If new T-UFBs are generated by the T-UFB generating unit 300 after the compensation, it is possible to further increase the concentration of the UFBs contained in the T-UFB-containing liquid with the above-described properties. That is, it is possible to increase the concentration of the contained UFBs by the number of circulations through the dissolving unit 200, the T-UFB generating unit 300, and the post-processing unit 400, and it is possible to transfer the UFB-containing liquid W to the collecting unit 500 after a predetermined concentration of the contained UFBs is obtained.

The collecting unit 500 collects and preserves the UFB-containing liquid W transferred from the post-processing unit 400. The T-UFB-containing liquid collected by the collecting unit 500 is a UFB-containing liquid with high purity from which various impurities are removed.

In the collecting unit 500, the UFB-containing liquid W may be classified by the size of the T-UFBs by performing some stages of filtration processing. Since it is expected that the temperature of the T-UFB-containing liquid W obtained by the T-UFB method is higher than normal temperature, the collecting unit 500 may be provided with a cooling unit. The cooling unit may be provided to a part of the post-processing unit 400.

The schematic description of the UFB generating apparatus 1 is given above; however, it is needless to say that the illustrated multiple units can be changed, and not all of them need to be prepared. Depending on the type of the liquid W and the gas G to be used and the intended use of the T-UFB-containing liquid to be generated, a part of the above-described units may be omitted, or another unit other than the above-described units may be added.

For example, when the gas to be contained by the UFBs is the atmospheric air, the degassing unit 100 and the dissolving unit 200 can be omitted. On the other hand, when multiple kinds of gases are desired to be contained by the UFBs, another dissolving unit 200 may be added.

The units for removing the impurities as described in Figs. 11(a) to 11(c) may be provided upstream of the T-UFB generating unit 300 or may be provided both upstream and downstream thereof. When the liquid to be supplied to the UFB generating apparatus is tap water, rain water, contaminated water, or the like, there may be included organic and inorganic impurities in the liquid. If such a liquid W including the impurities is supplied to the T-UFB generating unit 300, there is a risk of deteriorating the heating element 10 and inducing the salting-out phenomenon. With the mechanisms as illustrated in Figs. 11(a) to 11(c) provided upstream of the T-UFB generating unit 300, it is possible to remove the above-described impurities previously.

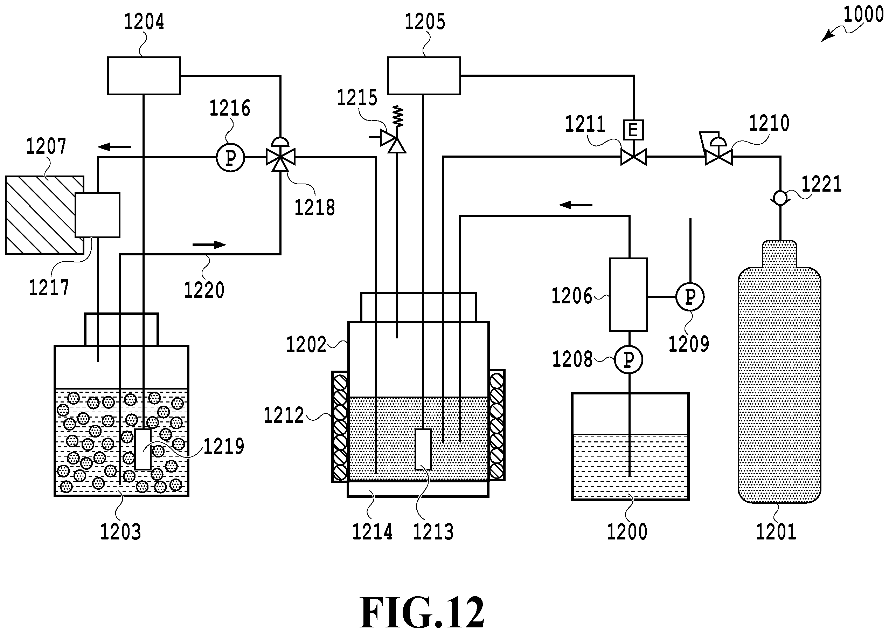

Fig. 12 is a schematic diagram illustrating a UFB-containing liquid generating apparatus 1000 of the present embodiment. Here is described an example where a gas in UFBs is nitrogen, and a liquid is pure water. The UFB-containing liquid generating apparatus 1000 includes a solvent tank 1200 retaining pure water inside, a nitrogen gas cylinder 1201 retaining a nitrogen gas, a gas dissolving tank 1202 that dissolves the nitrogen gas into the pure water, and a UFB-containing liquid collecting container 1203 that collects the liquid containing the UFBs. Additionally, the UFB-containing liquid generating apparatus 1000 includes a UFB concentration controller 1204 that controls the concentration of the UFBs, a concentration controller 1205, a degassing module 1206 that performs degassing, and a driving controlling system 1207 that controls driving of the UFB-containing liquid generating apparatus 1000.

The pure water is sucked up from the solvent tank 1200 by a pump 1208, and after the air dissolved in the pure water is depressurized and removed by a degassing pump 1209 through the degassing module 1206, conveyed to the gas dissolving tank 1202. The gas dissolving tank 1202 is supplied and filled with the nitrogen gas from the nitrogen gas cylinder 1201 in advance. Note that, a check valve 1221 is provided to the nitrogen gas cylinder 1201 to prevent a backflow of the nitrogen gas to the nitrogen gas cylinder 1201. The nitrogen gas is transferred to the gas dissolving tank 1202 from the nitrogen gas cylinder 1201 through a pressure adjusting valve 1210 and an electromagnetic open-close valve 1211.

The pure water transferred into the gas dissolving tank 1202 is agitated by a gas dissolution promoting mechanism 205 typified by a magnetic stirrer, ultrasonic waves, and the like to dissolve the nitrogen gas to the saturation solubility. In this process, it is possible to generate pure water in which highly concentrated nitrogen gas is dissolved in a shorter time by cooling the entirety of the gas dissolving tank 1202. For this reason, an outer wall of the gas dissolving tank 1202 is surrounded by a cooling jacket 1212 flowing cooling water. Note that, although the method of cooling from the outside of a container is described herein as a cooling method, it is not limited thereto, and a method of cooling by putting into the inside of a container a corrugated tube through which a refrigerant passes may be applied.

In the gas dissolving tank 1202, a concentration sensor 1213 that performs concentration detection on a gas is provided. In the gas dissolving tank 1202, based on a detection result by the concentration sensor 1213, dissolution is continued by a gas dissolution promoting mechanism 1214 while supplying the nitrogen gas until the concentration of the nitrogen gas in the pure water in the gas dissolving tank 1202 reaches a state close to saturation or reaches the saturation state. In this process, in order to prevent the pressure in the gas dissolving tank 1202 from exceeding a pressure resistance, excess nitrogen gas is released to the outside through a safety valve 1215 to adjust the inside of the gas dissolving tank 1202 to be at a constant pressure.

The nitrogen gas solution that reaches a desired nitrogen gas concentration (in a case of nitrogen, saturation solubility 0.0231 ml/ml) in the gas dissolving tank 1202 is supplied to a UFB generating head 1217 by a liquid transferring pump 1216. Thereafter, in the UFB generating head 1217, the nitrogen gas solution is heated by aligned heating elements (not illustrated) to make film boiling, and UFBs of the nitrogen gas are generated. The nitrogen gas solution containing the nitrogen UFBs generated is collected into the UFB-containing liquid collecting container 1203. In this process, in a case of generating a UFB-containing liquid at a higher concentration, supplying from the side of the gas dissolving tank 1202 of a three-way valve 1218 may be stopped, and the nitrogen gas solution containing the nitrogen UFBs may be circulated between the UFB-containing liquid collecting container 1203 and the UFB generating head 1217. With the circulation along with the driving of the UFB generating head 1217, the concentration of the UFBs is increased, and a highly concentrated UFB-containing liquid can be obtained.

The UFBs obtained by the present invention are UFBs having a significantly stable shape with several ten to several hundred nanometers in diameter. For this reason, the containing concentration in the UFB-containing liquid is substantially proportional to the number of times and time of repeatedly circulating in the UFB generating head 1217 based on the amount of the gas solution to be supplied and certain driving conditions. For this reason, a UFB-containing liquid at a desired concentration (UFB containing density) can be obtained by managing the conditions for circulating the UFB-containing liquid.

Additionally, in a case of obtaining a UFB-containing liquid at a UFB concentration strictly managed, a UFB concentration sensor 1219 is disposed in the UFB-containing liquid collecting container 1203 as illustrated in Fig. 1, and the circulation is continued while checking the UFB concentration by the UFB concentration controller 1204. Then, once the UFB-containing liquid reaches a desired UFB concentration, the UFB-containing liquid is collected, and thus a UFB-containing liquid at a UFB concentration strictly managed can be obtained. The UFB concentration sensor 1219 is a sensor of a type that irradiates the UFB-containing liquid with a green laser to determine a concentration from refraction of light, and the inventors succeeded to create a highly accurate UFB-containing liquid by using this UFB concentration sensor 1219.

Additionally, although the example where a nitrogen gas is the gas to be dissolved into the liquid is described in the present embodiment, it is not limited thereto, and it is possible to optionally select the gas contained in the UFBs. For example, a hydrocarbon system gas such as hydrogen, helium, oxygen, methane, ethane, and propane, fluorine and a fluorocarbon system gas, and a gas selected from the group consisting of neon, carbon dioxide, ozone, argon, chlorine, and air can be included.

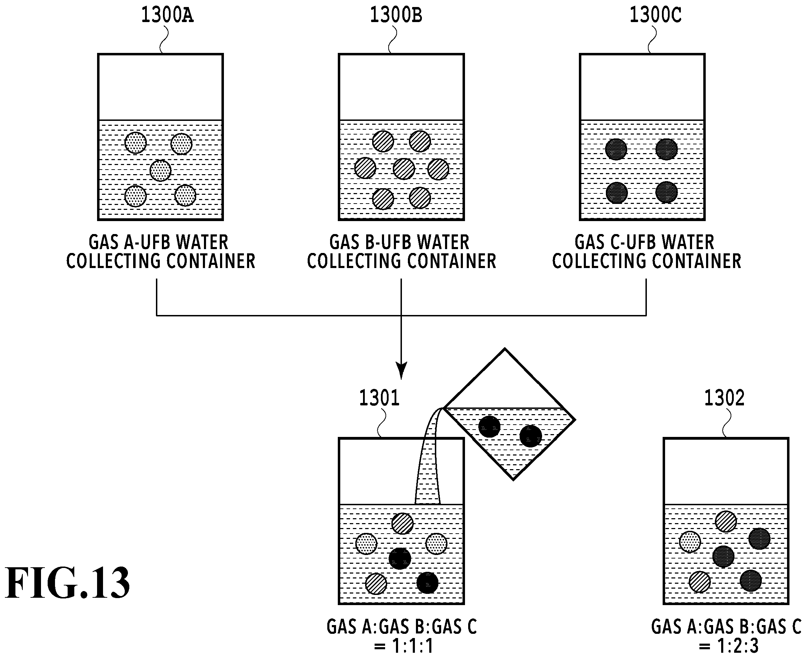

Fig. 13 is a diagram illustrating a flow of dispensing and mixing UFB-containing liquids of different gases with each other in accordance with a desired mix ratio. Here is described mixing of UFB-containing liquids of three types of gases (gas A, gas B, and gas C).

A UFB-containing liquid 1300A of the gas A, a UFB-containing liquid 1300B of the gas B, and a UFB-containing liquid 1300C of the gas C are mixed with each other based on a concentration (UFB containing density) measured in advance. A UFB-containing liquid 1301 is a liquid in which the UFB-containing liquid 1300A, the UFB-containing liquid 1300B, and the UFB-containing liquid 1300C are mixed with each other such that the mix proportion is 1:1:1. On the other hand, a UFB-containing liquid 1302 is a liquid in which the UFB-containing liquid 1300A, the UFB-containing liquid 1300B, and the UFB-containing liquid 1300C are mixed with each other such that the mix proportion is 1:2:3. As described above, with the UFB-containing liquids that are generated for each gas solution being mixed with each other based on a concentration (UFB containing density) measured in advance, it is possible to obtain compositive performance as a UFB-containing liquid without losing the features that each UFB has.

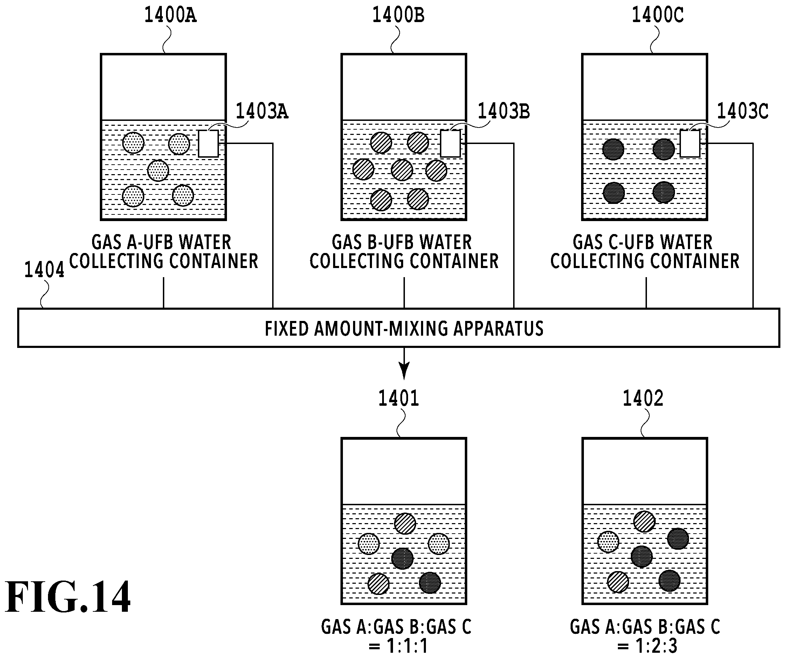

Fig. 14 is a diagram illustrating a fixed amount-mixing apparatus 1404 that is capable of obtaining a UFB-containing liquid in which each gas is at a desired concentration. In order to mix UFB-containing liquids, the concentrations of containing liquids of the corresponding gas A, gas B, and gas C are measured by concentration sensors 521A, 521B, and 521C disposed in corresponding UFB-containing liquid collecting containers 1400A, 1400B, and 1400C so as to be at a desired mix ratio. Based on the measurement results by concentration sensors 1403A, 1403B, and 1403C, the UFB-containing liquids are mixed with each other. A UFB-containing liquid 1401 is a liquid in which a UFB-containing liquid 1400A, a UFB-containing liquid 1400B, and a UFB-containing liquid 1400C are mixed with each other such that the mix proportion is 1:1:1. On the other hand, a UFB-containing liquid 1402 is a liquid in which the UFB-containing liquid 1400A, the UFB-containing liquid 1400B, and the UFB-containing liquid 1400C are mixed with each other such that the mix proportion is 1:2:3.

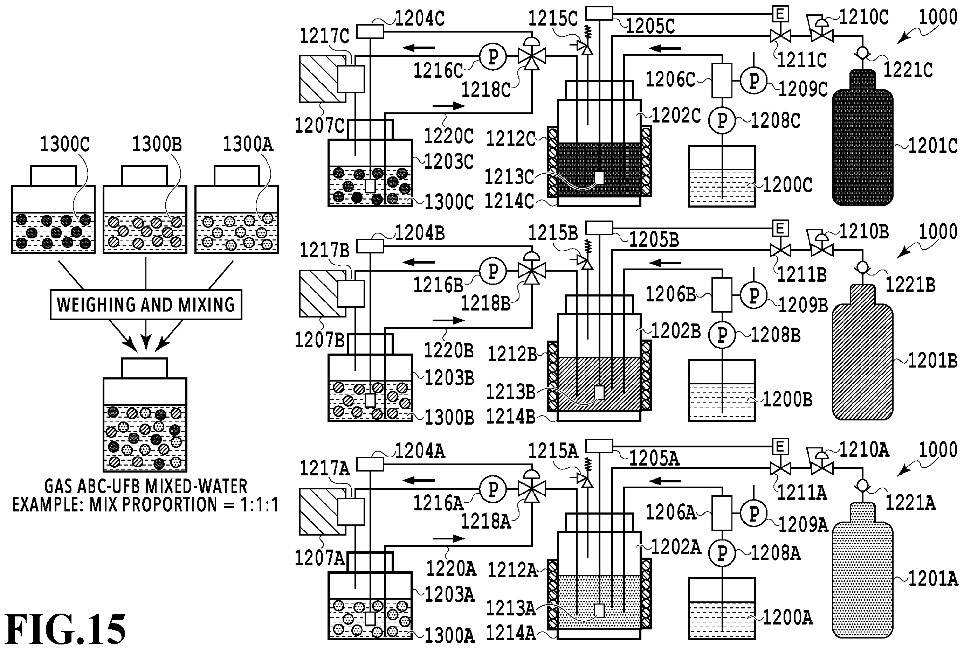

Fig. 15 is a diagram illustrating the UFB-containing liquid generating apparatus 1000 and generating steps to mix UFB-containing liquids at a desired mix ratio. Note that, the last alphabet in each reference sign in Fig. 15 represents a corresponding gas. UFB-containing liquids of UFBs that contain three types of different gases, respectively, are generated by the three UFB-containing liquid generating apparatuses 1000, and the generated UFB-containing liquids are mixed with each other. Here is described a case of using pure water as the liquid in which the gas is dissolved.

Respective gases are, first, transferred into gas dissolving tanks 1202 (1202A, 1202B, and 1202C) and dissolved into degassed pure water. In this process, since the solubility with respect to the pure water is different depending on the type of gas, concentration sensors 1214A, 1213B, and 1213C are disposed in the corresponding gas dissolving tanks 1202, and the dissolution is continued until each of the gas dissolving tanks 1202 reaches a desired concentration. Once all the gas dissolving tanks 1202 reach a desired concentration, liquid transferring pumps 1216A, 1216B, and 1216C are operated. With the operation of the liquid transferring pumps, three-way valves 1218A, 1218B, and 1218C are set to a flow of supplying from the gas dissolving tanks 1202 to the UFB generating heads 1217, and UFB mixed-liquids are generated by the UFB generating heads 1217, respectively.

The concentrations (UFB containing densities) of the UFB-containing liquid 1300A of the gas A, the UFB-containing liquid 1300B of the gas B, and the UFB-containing liquid 1300C of the gas C during the UFB mixed-liquid generation are different per unit time. For this reason, in the present embodiment, the three-way valves 1218 are adjusted based on a measurement value by the UFB concentration sensors 1219 disposed in corresponding UFB mixed-liquid collecting containers 1203, and UFB-containing liquids 1300 are circulated until reaching a desired concentration.

The individual UFB-containing liquids generated as described above are weighed in accordance with a UFB concentration ratio of the corresponding gas and are mixed with each other; thus, UFB mixed-liquids of desired gas A, gas B, and gas C can be obtained. The UFBs contained in the UFB-containing liquid obtained as described above maintains the stable shape (size) of the initial stage of generation even after the mixing; for this reason, temporal change is small, and the features as a UFB-containing liquid can be maintained for long time.

As described above, multiple types of UFB-containing liquids are generated for each gas, and the UFB-containing liquids are mixed with each other based on a desired UFB concentration ratio. With this, it is possible to provide a generating method for generating an ultra-fine bubble-containing liquid in which multiple types of UFBs of different gas components are mixed at a desired concentration ratio, and a manufacturing apparatus for a liquid containing ultra-fine bubbles.

### (Second Embodiment)

A second embodiment of the present invention is described below with reference to the drawings. Note that, since the basic configuration of the present embodiment is similar to that of the first embodiment, a characteristic configuration is described below.

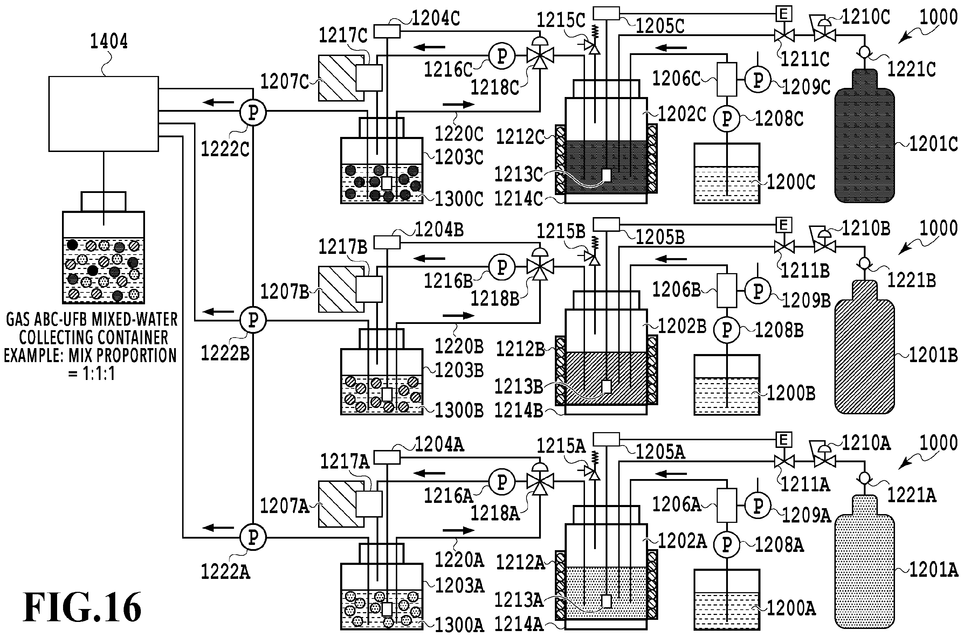

Fig. 16 is a diagram illustrating the UFB-containing liquid generating apparatus 1000 and generating steps to mix UFB-containing liquids at a desired mix ratio in the present embodiment. Note that, the last alphabet in each reference sign in Fig. 16 represents a corresponding gas. In the present embodiment, a pump 1222 is connected to the UFB-containing liquid collecting container 1203, and the generated UFB-containing liquid is supplied to the fixed amount-mixing apparatus 1404 by the pump 1222. With the configuration of the present embodiment, it is easy to selectively mix UFB-containing liquids of necessary gases with each other by selectively driving a pump corresponding to the gas, and for example, it is also possible to select only two types such as the UFB-containing liquid of the gas A and the UFB-containing liquid of the gas C. Additionally, with systems manufacturing UFB-containing liquids of further more gases being connected, it is possible to manufacture a mixed UFB-containing liquid formed of UFB-containing liquids of many gases.

Note that, although the configuration of including pumps for each type of gas is described in the present embodiment, it is not eyeground, and multiple UFB-containing liquids may be supplied by switching valves with a single pump.

### (Third Embodiment)

A third embodiment of the present invention is described below with reference to the drawings. Note that, since the basic configuration of the present embodiment is similar to that of the first embodiment, a characteristic configuration is described below.

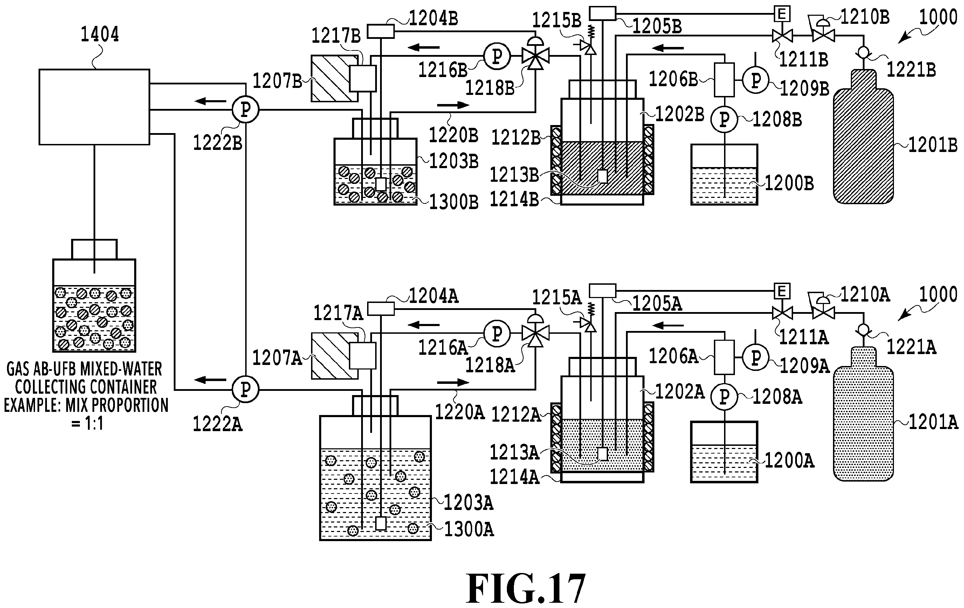

Fig. 17 is a diagram illustrating the UFB-containing liquid generating apparatus 1000 and generating steps to mix UFB-containing liquids at a desired mix ratio in the present embodiment. Note that, the last alphabet in each reference sign in Fig. 17 represents a corresponding gas. In the present embodiment, UFB mixed-water solutions are generated from two types of gas solutions having greatly different gas solubilities and mixed with each other at a desired UFB ratio to manufacture a mixed UFB-containing liquid.

In the present embodiment, for example, UFB-containing liquids are generated from the solution 1300B of carbon dioxide and the solution 1300A of nitrogen, which have solubilities of 1.713 ml/ml and 0.0231 ml/ml at 0°C, respectively, and the generated UFB-containing liquids are mixed with each other at a desired ratio. Since the carbon dioxide 1300B and the nitrogen 1300A have different solubilities as described above, the nitrogen 1300A is retained by a UFB-containing liquid collecting container 1203A with a large capacity, and many UFBs are generated by circulating further more. With the respectively generated UFBs mixed with each other as described above, a UFB mixed-liquid formed of UFBs in a uniform shape (size) can be obtained.

### (Fourth Embodiment)

A fourth embodiment of the present invention is described below with reference to the drawings. Note that, since the basic configuration of the present embodiment is similar to that of the first embodiment, a characteristic configuration is described below.

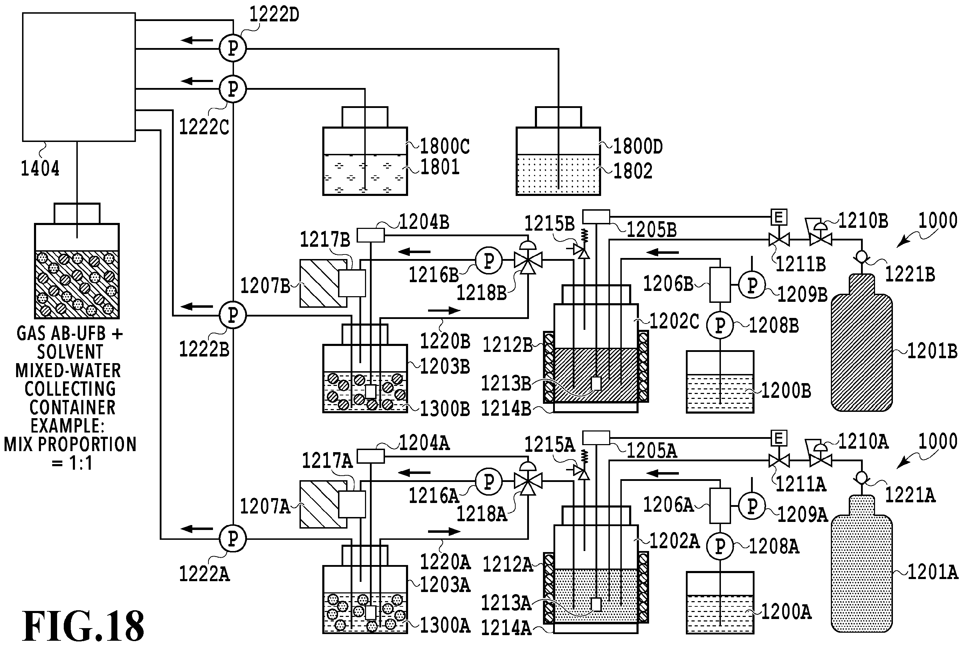

Fig. 18 is a diagram illustrating the UFB-containing liquid generating apparatus 1000 and generating steps to mix UFB-containing liquids at a desired mix ratio in the present embodiment. Note that, the last alphabet in each reference sign in Fig. 18 represents a corresponding gas. In the present embodiment, a system that mixes the UFB-containing liquid generated by the UFB-containing liquid generating apparatus 1000 and a solvent C (1800C) and a solvent D (1800D) containing no UFBs with each other is described.

In the present embodiment, the gas A is oxygen, the gas B is nitrogen, the solvent C is a surfactant water solution, and the solvent D is an alkali water solution, and the gas A and the gas B are dissolved into degassed pure water such that each gas reaches the saturation state. The UFB-containing liquid generating apparatus 1000 of the gas A and a UFB-containing liquid generating apparatus of the gas B are connected with the fixed amount-mixing apparatus 1404 through the pumps 1222, and a container 1801 retaining the solvent C and a container 1802 retaining the solvent D are connected with the fixed amount-mixing apparatus 1404 through pumps 1222C and 1222D.

UFB-containing liquids of oxygen and nitrogen are generated by the UFB-containing liquid generating apparatus 1000 of the gas A and the UFB-containing liquid generating apparatus of the gas B, respectively. Thereafter, oxygen and nitrogen are transferred into a fixed amount-mixing apparatus 500 by the pumps 1222C and 1222D and are mixed such that the surfactant is 0.1 to 1% and a hydrogen ion concentration (pH) is 7.5 to 8 by being combined with a UFB containing mixed liquid of oxygen and nitrogen that is mixed in advance.

In the present embodiment, a cutting fluid is created by a mixed UFB-containing liquid generated as described above. As a general cutting fluid, there are an emulsion type to which mineral oil, synthetic oil, and the like are added, a solution type to which a water-soluble solvent and the like are added, and a soluble type having both the features of the above, and they all have problems of a health hazard caused by mist, environment adaptability, and the like.

In contrast, since 99% or more of the cutting fluid formed of the mixed UFB-containing liquid is made of water, the above-described problems are solved, and also the processability, which is the original goal, is never reduced. The UFBs of oxygen and nitrogen reach into a processing point with the surfactant, and thus the cooling effect is increased while a processing load is reduced, and also it is possible to extend the life of a grinding stone. Additionally, an alkali component suppresses occurrence of rust caused by the UFBs containing oxygen. On the other hand, the UFBs containing oxygen contributes to prevention of bacteria rotting in the collected cutting fluid, and an effect of suppressing occurrence of smell of rot can be obtained.

Note that, the water solution containing no UFBs is not limited to the example described in the present embodiment and can be optionally selected. Additionally, although the two types that are the surfactant water solution and the alkali water solution are described as an example of the water solution containing no UFBs in the present embodiment, it is not limited thereto, and a single type or multiple types may be applied.

As described above, with the present invention, a large amount of a sophisticated liquid based on a mixed UFB-containing liquid can be created at a low cost.

### (Comparative Example)

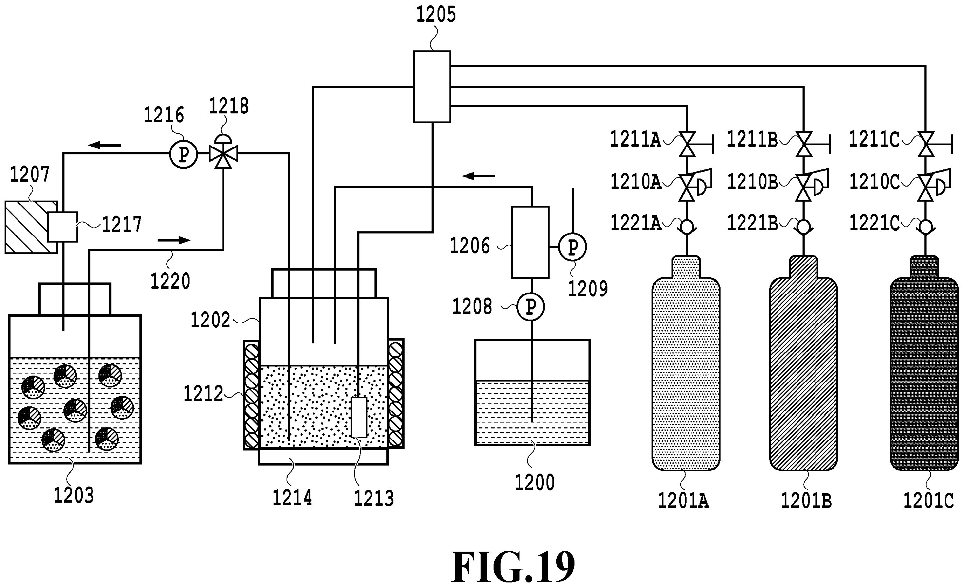

Fig. 19 is a diagram illustrating a UFB-containing liquid generating system of a first comparative example. In the UFB-containing liquid generating system of the first comparative example, a mixed gas adjusted to a desired mix concentration is supplied to a gas dissolving layer 1202, and a mixed solution is generated. Thereafter, the mixed solution is heated to make film boiling, and thus UFBs containing the mixed gas are generated.

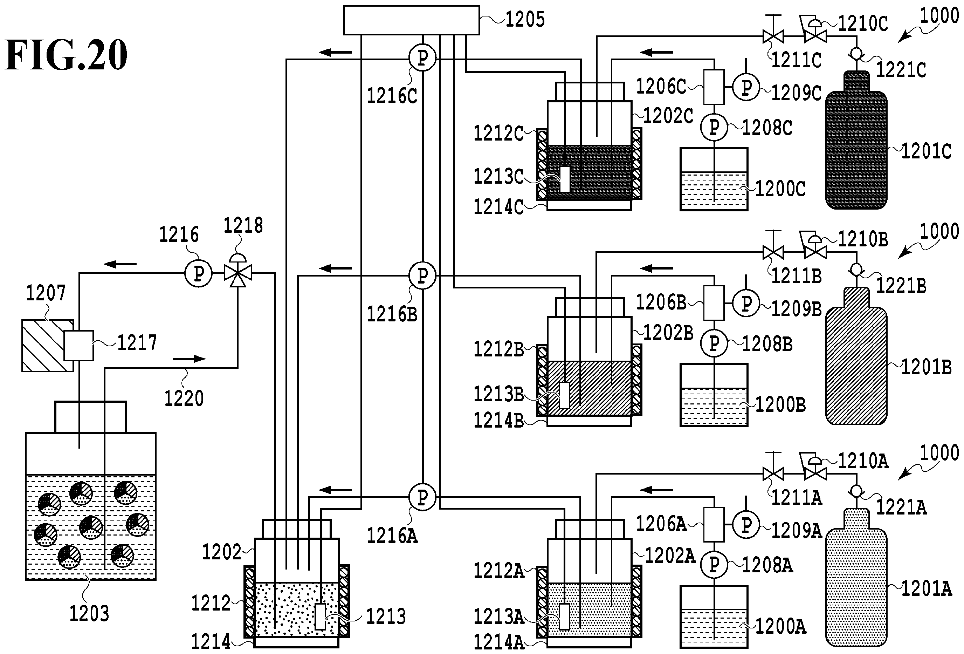

Additionally, Fig. 20 is a diagram illustrating a UFB-containing liquid generating system of a second comparative example. In the UFB-containing liquid generating system of the second comparative example, solutions for each gas are generated, and the generated solutions are mixed with each other in a solution mixing tank through a concentration controller based on a value obtained by a concentration sensor so as to be at a predetermined concentration and are supplied to a UFB generating head; thus, UFBs containing mixed gas are generated.

In either cases of the first comparative example and the second comparative example, UFB mixed-water having characteristics of each gas is generated; however, unlike the present invention, the gases are mixed with each other within UFBs. For this reason, the first comparative example and the second comparative example are unsuitable for a case of appropriately applying the characteristics that the UFBs of each gas have to a portion to be affected, like the present invention.

Additionally, in a case of making an active gas such as ozone into a mixed gas by a method like the comparative examples, the properties of the gas may be lost, and an effect may not be achieved. However, with the mixing method of the present invention applied, since gases are not mixed within UFBs, it is possible to supply a UFB-containing liquid containing a gas optimal for a portion to be affected without losing the properties of the gas.

While the present invention has been described with reference to exemplary embodiments, it is to be understood that the invention is not limited to the disclosed exemplary embodiments. The scope of the following claims is to be accorded the broadest interpretation so as to encompass all such modifications and equivalent structures and functions.

This application claims the benefit of Japanese Patent Application No. 2019-199393, filed October 31, 2019, which is hereby incorporated by reference wherein in its entirety.

## Claims

1. A generating method for an ultra-fine bubble-containing liquid comprising:
a first dissolving step to generate a first solution by dissolving a first gas into a liquid;
a second dissolving step to generate a second solution by dissolving a second gas into a liquid;
a first generating step to generate a first ultra-fine bubble-containing liquid containing ultra-fine bubbles by generating the ultra-fine bubbles that are generated by heating the first solution with a heating element to make film boiling on an interface between the first solution and the heating element;
a second generating step to generate a second ultra-fine bubble-containing liquid containing ultra-fine bubbles by generating the ultra-fine bubbles that are generated by heating the second solution with a heating element to make film boiling on an interface between the second solution and the heating element; and
a mixing step to mix the first ultra-fine bubble-containing liquid and the second ultra-fine bubble-containing liquid with each other based on a concentration of the ultra-fine bubbles contained in the first ultra-fine bubble-containing liquid and a concentration of the ultra-fine bubbles contained in the second ultra-fine bubble-containing liquid.

2. The generating method for an ultra-fine bubble-containing liquid according to claim 1, wherein
in the mixing step, the first ultra-fine bubble-containing liquid and the second ultra-fine bubble-containing liquid are conveyed by a pump.

3. The generating method for an ultra-fine bubble-containing liquid according to claim 1 or 2, wherein
in the first generating step, the ultra-fine bubbles are generated by a first head including a first heating element, and the first ultra-fine bubble-containing liquid containing the ultra-fine bubbles generated by the first head is retained in a first container,
in the second generating step, the ultra-fine bubbles are generated by a second head including a second heating element, and the second ultra-fine bubble-containing liquid containing the ultra-fine bubbles generated by the second head is retained in a second container,
in the first generating step, the first ultra-fine bubble-containing liquid generated is circulated between the first head and the first container, and
in the second generating step , the second ultra-fine bubble-containing liquid generated is circulated between the second head and the second container.

4. The generating method for an ultra-fine bubble-containing liquid according to claim 3, wherein
the circulation in the second generating step is circulated more than the circulation in the first generating step.

5. The generating method for an ultra-fine bubble-containing liquid according to any one of claims 1 to 4, wherein
in the mixing step, the first ultra-fine bubble-containing liquid, the second ultra-fine bubble-containing liquid, and a liquid containing no ultra-fine bubbles are mixed with each other.

6. The generating method for an ultra-fine bubble-containing liquid according to claim 5, wherein
the liquid containing no ultra-fine bubbles is multiple types of liquids.

7. A manufacturing apparatus for an ultra-fine bubble-containing liquid comprising:
a first dissolving means to generate a first solution by dissolving a first gas into a liquid;
a second dissolving means to generate a second solution by dissolving a second gas into a liquid;
a first generating means to generate a first ultra-fine bubble-containing liquid containing ultra-fine bubbles by generating the ultra-fine bubbles that are generated by heating the first solution with a first heating element to make film boiling on an interface between the first solution and the first heating element;
a second generating means to generate a second ultra-fine bubble-containing liquid containing ultra-fine bubbles by generating the ultra-fine bubbles that are generated by heating the second solution with a second heating element to make film boiling on an interface between the first solution and the second heating element;
a first concentration detecting means to detect a concentration of the ultra-fine bubbles contained in the first ultra-fine bubble-containing liquid;
a second concentration detecting means to detect a concentration of the ultra-fine bubbles contained in the second ultra-fine bubble-containing liquid; and
a mixing means to mix the first ultra-fine bubble-containing liquid and the second ultra-fine bubble-containing liquid with each other based on a detection result by the first concentration detecting means and the second concentration detecting means.
